Europäisches Patentamt

(19) European Patent Office

Office européen des brevets

(11) Publication number: **0 011 870**

A1

(12) # EUROPEAN PATENT APPLICATION

(21) Application number: 79104791.3

(22) Date of filing: 30.11.79

(51) Int. Cl.³: **B 01 J 47/10**
**B 01 J 8/20, C 02 ᴄ 1/42**

(30) Priority: 01.12.78 AU 6981/78

(43) Date of publication of application:
11.06.80 Bulletin 80/12

(84) Designated Contracting States:
BE DE FR GB IT NL SE

(71) Applicant: ICI AUSTRALIA LIMITED
ICI House 1 Nicholson Street P.O.Box 4311
Melbourne Victoria 3001(AU)

(71) Applicant: Commonwealth Scientific and Industrial
Research Organization
Limestone Avenue
Campbell Australian Capital Territory, 2601(AU)

(72) Inventor: Murtagh, Ronald William
16 Marbray Drive
Glen Waverley, Victoria, 3150(AU)

(72) Inventor: Swinton, Everard Arthur
4 Pleasant View Crescent
Glen Waverley, Victoria, 3150(AU)

(74) Representative: Kneissl, Richard, Dr.
Widenmayerstrasse 46
D-8000 München 22(DE)

(54) Countercurrent contact process and apparatus.

(57) The invention concerns a process for contacting a particulate solid phase with a liquid phase by passing the phases countercurrent through a vertical column (10) divided into compartments by a plurality of perforated plates (11) and having a stirring means (23) in each compartment. The invention further provides apparatus for the contacting process. The process and apparatus of the invention offer the advantage of good liquid-solid contact and facile control of particle residence time and are especially suitable for contacting ion-exchange resins with aqueous solutions.

./...

Croydon Printing Company Ltd.

Fig. 1.

This invention relates to processes and apparatus for contacting a solid phase with a liquid phase and in particular to fluidised bed processes and apparatus for continuous countercurrent contacting of a particulate solid with a liquid.

Many chemical engineering processes require the intimate contacting of a particulate solid phase and a liquid phase to effect mass transfer between the phases. For efficient operation of such processes it is desirable that each particle of the solid phase and all of the liquid phase be subjected to the same conditions during contacting and that the particles and the liquid be contacted for the time necessary to effect the required mass transfer.

Of the many different processes described for contacting a particulate solid phase with a liquid phase, continuous countercurrent contacting, in which the two phases are passed through a contacting system continuously but in opposing directions, has been found to be of considerable value. Continuous, countercurrent contacting processes which employ the particulate solid in the form of a fluidised bed have been found to be particularly useful.

Most continuous, countercurrent contacting processes which employ a fluid bed use a vertical column divided into compartments by a plurality of horizontal trays. In use, the liquid phase is pumped into the lower portion of the column and exits from the upper portion of the column and the particulate solid phase is fed into the upper part of the column, cascades down the column from compartment to compartment and exits the column at or near its base.

As indicated above, for efficiency, it is desirable that each particle of the solid phase and all of the liquid phase be subjected to the same conditions during contacting and that the particles and liquid be contacted for the time necessary to effect the required mass transfer. Thus the principal design problem in continuous, countercurrent contacting processes which use a vertical contacting column and a fluidised bed of particles is obtaining and maintaining the desired residence time for the particles while providing practical flow rates for the particles and liquid and good liquid-solid contact.

Many different processes have been developed to attempt to control the particle residence time while maintaining satisfactory flow rates and good liquid-solid contact. Basically these prior art processes use a column separated into compartments by a plurality of baffles or plurality of plates containing orifices but the processes differ markedly in the manner in which the particle residence time is controlled.

Certain prior art processes use downcomers to control the movement of the solid particulate material from compartment to compartment. However, problems are encountered in the operation of such processes as the liquid stream tends to short circuit up the downcomers rather than passing through the orifices in the trays and the result is poor contact between the solid and liquid phases.

Other prior art processes use porous or perforated trays without downcomers and the flow of liquid up the column, which maintains the fluidised bed of particles on each tray, is periodically reversed to allow the particles to drop through the trays from each compartment to the compartment below. Apart from the more obvious disadvantages associated with flow reversal, such as loss of throughput, axial backmixing and the need to provide complicated sytems of timers, relays and valves, it is extremely difficult to establish stable column operating conditions using a pulsed flow process. In practice, there is a tendency for some trays to become heavily loaded with particles while other trays carry only light loadings.

In a more recent development, an endeavour to overcome the deficiencies of the prior art processes has been made by the use of a column with a plurality of angled baffles the particulate solid being retained in the compartments formed by the baffles by the passage of the liquid phase up the column. The solid particles are transferred progressively and substantially completely from compartment to adjacent compartment by reducing the flow of fluid from the adjacent compartment by passing the fluid through an external bypass into the next compartment. In this process the liquid phase can be passed through the column continuously without interuption or reversal of flow and the residence time of the particulate solid in the column can be carefully controlled. However, the process involves the use of complex apparatus including many valves and bypass lines which must be precisely controlled by a complicated timer and electrical relay system.

An object of the present invention is to provide a process and apparatus for the continuous countercurrent contacting of a particulate solid phase and a liquid phase whereby convenient control of the residence time of the particles may be obtained without the use of complex control equipment.

Accordingly the invention provides a process for continuous countercurrent contacting of a particulate solid phase and a liquid phase comprising: feeding the uncontacted particulate solid into the first end of a vertical column divided into compartments by a plurality of horizontal perforated plates extending across substantially the entire cross section of the column and wherein each compartment is provided with a
stirring means;

continuously feeding the uncontacted liquid phase into
the second end of the column and continuously removing
the contacted liquid phase from the first end of the
column;

operating said stirring means to maintain said particulate solid in the form of a fluidised bed and to
control the residence time of the particulate solid in
each compartment; and

removing the contacted particulate solid from the
second end of the column.

One of the major advantages of the process of
the invention is that the stirring means in each compartment provides a convenient means for the control
of the particle residence time in each compartment
while ensuring stable fluidisation of the particulate
solid, good liquid distribution and hence good liquid-
solid contact. As a result, the perforations in the
trays can be made of such a size and number to allow
practical flow rates of particulate solid and liquid
to be used. In contrast it should be noted that a
simple vertical column having a plurality of horizontal
perforated plates is not useful in practice. In such
a column it is necessary for the perforations in the
trays to be restricted in size and number to obtain
sufficient pressure drop for liquid flow across each
plate to keep the liquid flow distributed across the
whole cross section of the column so that the particles
are maintained in the form of a fluidised bed. The
result of the restriction of the size and number of
the perforations is an unacceptably small flow of
particulate solid through the perforations against the
countercurrent flow of the liquid.

When it is desired to contact a specific particulate solid with a specific liquid and to have a particular residence time for the particulate solid between adjacent plates it is possible to design a column for use in the process of the invention in which the stirring means stirs at a fixed rate. However, preferably the stirring means used in the process of the invention is adjustable with respect to rate thereby providing a simple means for the control of the residence time of the particles in each compartment.

The stirring means provided in each compartment may be an independently driven stirrer mounted on the side of the column adjacent to each compartment. However, preferably the stirring means comprises at least one vane, blade, paddle or disc turbine in each compartment fitted normal to a vertical shaft extending along the central axis of the column.

The design of the stirring means is not critical provided it is able to create sufficient agitation to maintain the particulate solid in the form of a fluidised bed. In practice one or more vanes, paddles, blades or multiple bladed disc turbines fitted normal to a shaft running down the central axis of the column and sweeping approximately 50 to 90% of the column width have been found to be suitable. The profile of such vanes, paddles or blades is not critical as the degree of agitation and hence the residence time of the particles in the compartments may be controlled by the rate of stirring. However, in large diameter columns the length of the vane, paddle or blade may be such that when the velocity of its outermost section provides adequate agitation in the area which it sweeps that section of the vane, paddle or blade near the centre of the column may have insufficient velocity to adequately agitate the area which it sweeps. In such cases, in order to obtain more uniform agitation across the cross section of the column it may be desirable to design the vane, blade or paddle with a reduction in profile from its point of attachment to the central shaft to its outermost extremity. Alternatively, extra vanes, paddles or blades may be fitted to the central shaft to sweep only the inner section of the column.

The stirring means may be located in any convenient position in a compartment provided it is able to create sufficient agitation to maintain the particulate solid in the form of a fluidised bed. Preferably the stirring means is located in the compartment in the vicinity of the plate surface which faces the end of the column into which the particulate solid is fed. Thus the stirring means is preferably in the vicinity of the upper surface of the plates when the particulate solid is fed into the upper end of the column and in the vicinity of the lower surface of the plates when the particulate solid is fed into the lower end of the column. More preferably, the whole of the stirring vane, paddle, blade or disc turbine lies within the first quarter of the vertical distance between the plate surface which forms the compartment.

When the stirring means provided in each compartment are independently driven stirrers the degree of agitation and hence the residence time of the particles in each compartment may be adjusted independently. However, preferably in the process of the invention each stirring means is operated at the same rate to impart substantially the same degree of agitation and hence residence time to the particles in each compartment. This may be achieved conveniently by the use of a stirring means comprising at least one vane, blade, paddle or disc turbine in each compartment fitted normal to a vertical shaft running down the central axis of the column. With this assembly the degree of agitation and hence the particle residence time in each compartment may be controlled by adjusting the rate of rotation of the central shaft and the degree of agitation and hence the particle residence time will be substantially the same in each compartment.

The degree of stirring and hence the degree of agitation of the particulate solid in a compartment may be varied over a wide range. The degree of stirring may be maintained at a rate just sufficient, in combination with the flow of the liquid phase, to keep the particulate solid in the form of a fluidised bed. In this instance there will be a gradient of particulate solids concentration in a compartment ranging from high in the vicinity of the swept surface of the plate to low in the vicinity of the non-swept surface of the adjacent plate and the particles will have a relatively short residence time in the compartment. Alternatively the degree of stirring may be increased to the extent that the concentration of particles in a compartment is essentially uniform and the flow of particulate solid through the column is virtually stopped. Thus by adjusting the degree of stirring the average residence time of the particles in a compartment may be varied over a wide range while still maintaining efficient contact between the particles and the liquid phase.

Thus in the process of the invention the stirring means may be operated at a rate sufficient to maintain a substantially uniform distribution of particles in each compartment and periodically reducing the rate of stirring to allow the particles to move from one compartment to the next adjacent compartment. However, preferably the process of the invention is operated by continuously feeding the uncontacted particulate solid into the first end of the column, continuously removing the contacted particulate solid from the second end of the column, and operating the stirring means at a rate which allows the particulate solid to move continuously through the column. In this manner apparatus to contact a particular particulate solid with a particular liquid phase may be operated continuously with set feed rates and stirring rate without complex arrangements of timers, electrical relays and valves.

The process of the invention may be used for a wide range of applications which require the intimate contact of a particulate solid phase with a liquid phase. The process is particularly suitable for the contact of particulate ion exchange resins with a liquid and may be used both in the adsorbing or stripping stage and in the regeneration stage. In both stages the process of the invention offers the advantages of continuous treatment of a liquid with high contact efficiency between the resin particles and the liquid and facile control of the contact time between the liquid and the particles of resin.

The process of the invention also offers the advantage that a fluidised bed of the particulate solid may be maintained with much lower liquid phase velocities than those required in prior art processes. In the process of the invention fluidisation of the particulate solid is facilitated by the agitation provided by the stirring means located in each compartment. As a result the fluidisation of the particulate solid is not solely dependent on the flow rate of the liquid phase and therefore the flow rate of the liquid phase through the column may be reduced below that required when the liquid flow alone is responsible for the maintenance of a stable fluid bed.

This advantage is particuarly useful in the re-

0011870

generation stage of ion exchange processes as it allows the resin particles to be maintained in a fluidised state to give good resin-regenerant contact with a small relative regenerant liquid to resin flow rate.

In the operation of any fluid bed process there is a tendency for the fluidised particulate material to segregate according to particle size the larger particles moving to the bottom of the bed and the finer particles to the top of the bed. The process of the present invention has the further advantage that the agitation provided by the stirring means significantly decreases the natural segregation of the particulate solid. This is an important advantage in processes involving the intimate contacting of a particulate solid phase with a liquid phase to effect mass transfer between the phases. The finer particles undergo mass transfer more efficiently and require shorter contact time than the larger particles, however, natural segregation causes the finer particles to remain in the fluid bed for a longer period than the larger particles.

The process of the invention is particularly suitable for the treatment of liquids with magnetic ion exchange resins. In magnetic ion exchange resins containing a proportion of magnetic material such as iron oxide, chromium oxide or ferrites the magnetised particles tend to clump together to form aggregates which have higher sedimentation velocities than those of the individual particles. In the process of the invention the agitation provided by the stirring means overcomes the problem of aggregation and as a result a stable fluidised bed may be maintained with much lower liquid phase velocities than those required in prior art processes.

The process of the invention may be used to contact a particulate solid with a liquid of lower specific gravity than that of the solid. In such processes the particulate solid is fed into the upper end of the vertical column and the liquid phase is fed into the lower end of the column under sufficient pressure to force the liquid above the highest plate. Examples of such processes include the removal of contaminant ions from water including the dealkalization of hard water and the desalination of brackish water.

Although the process of the invention may find its major application to contact a liquid with a particulate solid of higher specific gravity as described in the preceding paragraph it may also be used to contact a liquid with a particulate solid of lower specific gravity. In such processes the particulate solid is fed into the lower end of the vertical column and the liquid phase is fed into the upper end of the vertical column. Examples of such processes include those in which high density solvent is contacted with a particulate solid of lower density and those in which a high density slurry, for example an aqueous slurry of a ground ore, is contacted with a particulate solid of lower density.

The size of the column used in the process of the invention may be varied over a wide range and will depend to a large extent both on the amount of the particulate solid phase and liquid phase to be contacted and on the nature of the particulate solid phase and the liquid phase. More specifically the size of the column and the spacing of the plates will depend on the throughput required and the contact time required to achieve the desired mass transfer between the phases. As a general rule the more plates that are used in a column the shorter the column can be made but practical factors and economics may limit the number of plates used. The most favourable column size and plate spacing for a particular contacting operation may be calculated without undue experimentation by those skilled in the art making use of known chemical engineering principles.

The design of the perforated plates used in the process of the invention is not critical. The perforations may be of any suitable geometric shape including, for example, slots, squares, triangles and ellipses but conveniently the holes are circular. The perforations may be distributed uniformly over the surface of the plate or arranged in an annulus towards the outside of the plate. The size and number of the perforations on each plate will depend to a large extent on the throughput required for the column and the contact time required to achieve the desired mass transfer between the phases. The most favourable size and number of perforations for a given contacting operation may be calculated without undue experimentation by those skilled in the art making use of known chemical engineering principles. In practice, in the contacting of a particulate ion exchange resin with an aqueous solution, circular holes of diameter in the range from 5 mm to 30 mm (preferably 10 mm to 20 mm) making up between 10 to 50% (preferably 12 to 25%) of the plate area have been found to be suitable.

The perforated plates used in the process of the invention are defined as being fixed horizontally in the vertical column. It will be appreciated by those skilled in the art that one of the advantages of the process of the invention is that the action of the stirring means keeps the particles fluidised. It follows that in the process of the invention precise horizontal arrangement of the plates is unnecessary and therefore the process of the invention and the apparatus used therein should not be construed as being limited
only to the use of perforated plates which are precisely
horizontal.

In the process of the invention the perforated
plates are defined as extending across substantially
the entire cross section of the column and in general
it is preferred that the periphery of the perforated
plate is in contact with the inner wall of the column.
However, in certain applications, and in particular
in columns of large diameter, it may be preferable
that a relatively narrow gap is left between the periphery of the perforated plate and the inner wall of the
column to ensure that no build up of particulate solid
can take place at the junction of the periphery of the
plate and the inner wall of the column.

In a further embodiment the invention provides
apparatus for promoting contact between a particulate
solid phase and a liquid phase comprising:
a vertical column divided into compartments by a
plurality of horizontal perforated plates extending
across substantially the entire cross section of the
column;
an inlet for the uncontacted particulate solid phase
at the first end of the column and an outlet for the
contacted particulate solid at the second end of the
column;
an inlet for the uncontacted liquid phase at the sec-
ond of the column and an outlet for the contacted
liquid phase at the first end of the column;  and
a stirring means in each compartment.

When it is desired to contact a particulate solid
phase with a liquid phase of lower specific gravity
the inlet for the uncontacted particulate solid phase
is located at the upper end of the column, the outlet
for the contacted particulate solid phase is located at the lower end of the column, the inlet for the uncontacted liquid phase is located at the lower end of the column, the outlet for the contacted liquid phase is located at the upper end of the column and means (such as, for example, a pump) is provided for forcing the liquid through the inlet up through the column and out the outlet.

When it is desired to contact a particulate solid phase with a liquid phase of higher specific gravity the inlet for the uncontacted particulate solid phase is located at the lower end of the column, the outlet for the contacted particulate solid phase is located at the upper end of the column, the inlet for the uncontacted liquid phase is located at the upper end of the column, the outlet for the contacted liquid phase is located at the lower end of the column and means (such as, for example, a valve on the liquid phase outlet line) is provided for controlling the rate of flow of the liquid phase through the column.

Preferred embodiments of the process and apparatus of the invention are now illustrated with reference to the accompanying drawings. However, it is to be understood that the following description is by way of example only and the process and apparatus of the invention is not to be construed as restricted to these preferred embodiments.

In the drawings:

FIGURE 1 shows a schematic view of an embodiment of the contacting column of the invention using liquid phase upflow in the column; and

FIGURE 2 shows a schematic view of an embodiment of the contacting column of the invention using liquid phase downflow in the column.

FIGURE 3 is a graph which illustrates the effect of liquid phase flow rate on the residence time of particles between adjacent plates at a number of stirring rates with a fixed particulate solid phase flow rate.

FIGURE 4 is a graph which illustrates the effect of stirring rate on the residence time of particles between adjacent plates for two different liquid phase flow rates with a fixed particulate solid phase flow rate.

FIGURE 5 is a graph which illustrates the effect of liquid phase flow rate on the residence time of particles between adjacent plates for three different percentage plate free areas (perforation areas) with a fixed particulate solid phase flow rate.

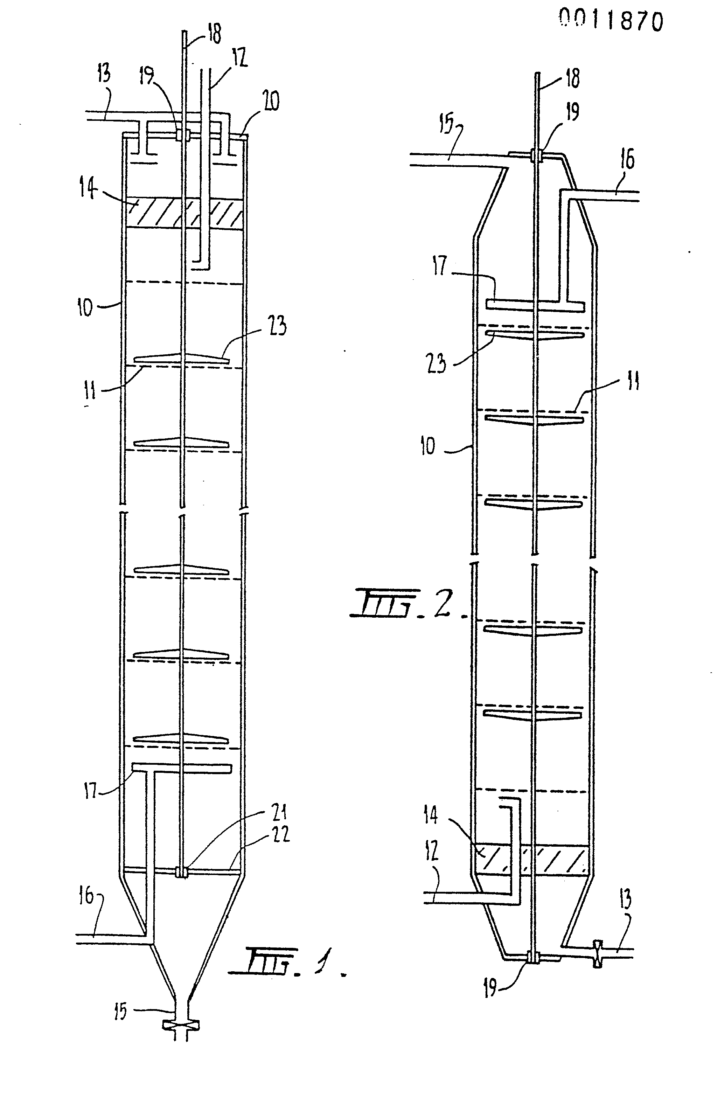

Referring to the drawings, Figure 1 shows a contacting column 10 which is divided into a number of contacting compartments by perforated plates 11. The top of column 10 is fitted with an inlet 12 for the particulate solid phase, an outlet 13 for the liquid phase and a baffle 14 to prevent the particulate solid phase from being carried out with the liquid phase. The bottom of column 10, which is in the form of an inverted cone, is fitted with a particulate solids outlet 15 and a liquid phase inlet 16 which feeds the liquid phase into the column through a distributor ring 17.

The column 10 is fitted with a centrally mounted shaft 18 which is journalled in bearing 19 in the top plate 20 of the column and in bearing 21 located in support spider 22. In each compartment the centrally mounted shaft 18 is fitted with vertical, flat stirring blades 23.

In operation the liquid phase is pumped into the column 10 through the inlet 16 and the distributor ring 17, the particulate solid phase is introduced into the column 10 through inlet 12 and the centrally mounted

0011870

shaft 18 is rotated. The liquid phase is supplied at a pressure sufficient to pass through the perforated plates 11 and to exit the column through the outlet 13. The particulate solid phase is maintained in the form of a fluidised bed in each compartment by the combination of the flow of the liquid phase and the agitation provided by the stirring blades 23 and passes down the column 10 through the perforated plates 11 and exits the column 10 through outlet 15. The feed rates and stirrer speed are adjusted as required to give the desired residence time for the particulate solid in the compartments.

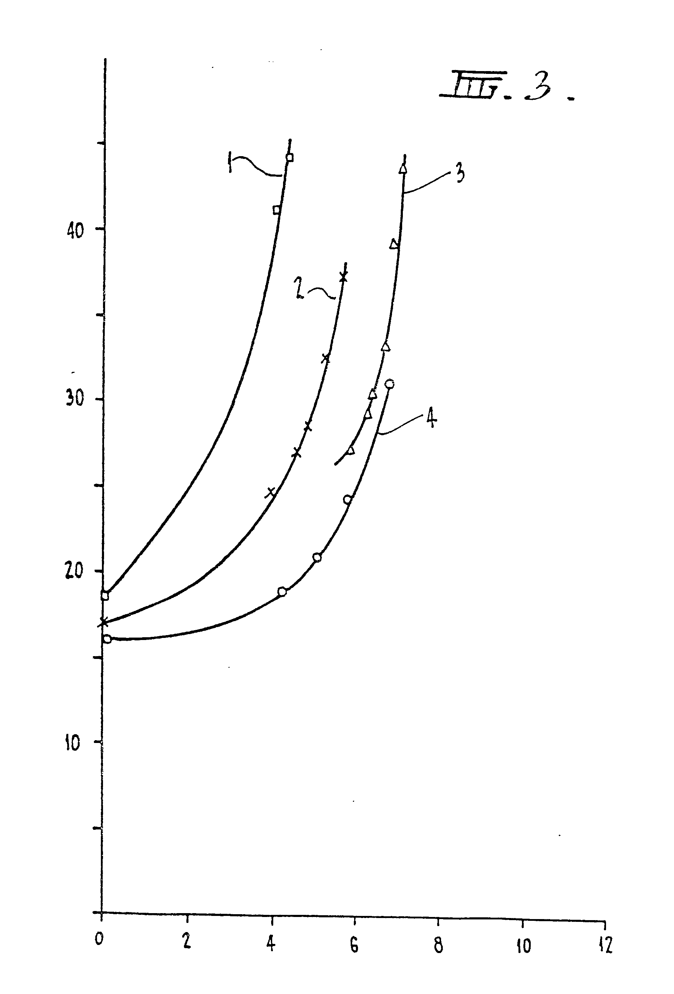

Figure 2 shows a contacting column 10 which is divided into a number of contacting compartments by perforated plates 11. The bottom of the column 10 is fitted with an inlet 12 for the particulate solid phase, an outlet 13 for the liquid phase and a baffle 14 to prevent the particulate solid phase from being carried out with the liquid phase. The top of the column 10 is fitted with a particulate solids outlet 15 and a liquid phase inlet 16 which feeds the liquid phase into the column through a distributor ring 17.

The column is fitted with a centrally mounted shaft 18 which is journalled in bearings 19 in the top and the bottom of the column 10. In each compartment the centrally mounted shaft 18 is fitted with vertical, flat stirring blades 23.

In operation the liquid phase is passed into the column 10 through the inlet 16 and the distributor ring 17, the particulate solid is passed into the column through inlet 12 and the centrally mounted shaft 18 is rotated. The liquid phase passes down the column through the perforated plates 11 and exits the column through the outlet 13. The particulate solid phase is maintained in the form of a fluidised bed in each compartment by the combination of the flow of the liquid phase and the agitation provided by the stirring blades 23 and passes up the column through the perforated plates 11 and exits the column through outlet 15. The feed rates and stirrer speed are adjusted as required to give the desired residence time for the particulate solid in the compartments.

It is to be understood that various alterations and modifications may be made to the apparatus defined in the foregoing description without departing from the spirit and scope of the invention as defined in the claims. For example, vertical baffles may be provided in each compartment on the inner walls of the column in order to provide improved agitation at lower stirring speeds.

In certain applications, and in particular in the regeneration of ion-exchange resins, the contacting column may be fitted with more than one liquid phase inlet and/or more than one liquid phase outlet. For example, in the use of the process and apparatus of the invention to regenerate an aqueous dealkalization ion-exchange resin it may be possible to regenerate the resin relatively quickly with a strong acid but necessary to thoroughly wash the resin with water to remove free acid. This may be achieved conveniently using the process and the apparatus of the invention by introducing relatively concentrated acid into the column between the first end and the second end, preferably in that half of the column nearest the first end, and introducing the wash water at the second end of the column. In this way the resin fed into the first end of the column and removed from the second end of the column is first contacted with the regenerant stream and then contacted with the wash stream. The wash stream may be merged with the regenerant stream in the column and the mixed streams removed from the first end of the column or, alternatively, the majority of the wash stream may be removed from the column through an outlet positioned before the regenerant inlet. In either case, it will be evident to those skilled in the art that the liquid phase flow rate may need to be different in different sections of the column. Such differences may be readily accommodated by the process and apparatus of the invention as the perforated plates in each section may be provided with different percentage free areas (hole areas) to allow for the different flow rate. It is also possible using the process and apparatus of the invention to maintain essentially the same particle residence time between adjacent plates throughout the column even though the percentage free area of the plates is different in different sections of the column. This may be done by maintaining different degrees of agitation between the plates in the different sections of the column either by operating the stirring means in the different sections at different rates or, preferably, by designing the stirring means in the different sections to give different degrees of agitation at the same stirring rate (eg using different size, shape or numbers of vanes, blades or paddles).

From the foregoing description it will be evident to those skilled in the art that the process and the apparatus of the invention offer significant advantages over prior art processes and apparatus. Further advantages provided by the process and apparatus of the invention include the simplicity and economy of design of the apparatus of the invention in combination with the good particulate solid phase - liquid phase distribution, and hence highly efficient liquid - solid contact, which may be obtained using the process of the invention. Other advantages, including the adaptability of the process and the apparatus of the invention to a wide range of particulate solid phase - liquid phase contacting operations and the applicability of the process and the apparatus of the invention to large scale operations, will also be evident to those skilled in the art.

The invention is now illustrated by but in no way limited to, the following Examples.

Example 1

This Example illustrates a contacting apparatus of the invention constructed to study the hydrodynamic performance of the process of the invention and the efficiency of the process of the invention when applied to ion exchange reactions.

A 3 m long colum of 0.33 m internal diameter was constructed from 12 mm thick "Perspex" acrylate polymer sheet ("Perspex" is a Trade Mark) substantially as illustrated in Figure 1. The plates (eleven) were spaced 200 mm apart and contained sufficient 16 mm diameter holes to give the required percentage free area. The stirring means comprised pairs of stainless steel blades fitted to a stainless steel shaft running along the vertical axis of the column, each pair of blades being located 8 mm above the plate surface. The blades were constructed of 2 mm thick stainless steel and had a 130 mm sweep radius. The vertical height of the blades reduced from 25 mm at the central shaft to 14 mm at their outer end.

Example 2

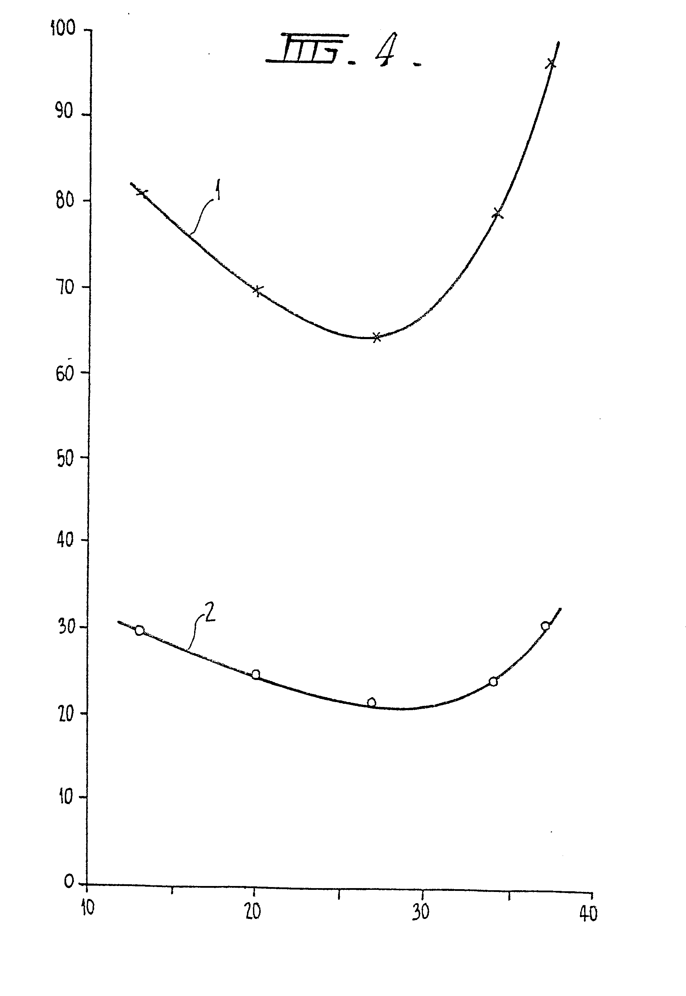

In order to study the hydrodynamic performance of the process of the invention a thermally regenerable, amphoteric, magnetic ion exchange resin of particle size 100 to 700 $\mu$m and specific gravity 1.20 to 1.21 was contacted with water in the column described in Example 1. The resin was fed into the column in the form of a slurry in water. The resin flow rate, the water flow rate, the stirring rate and the percentage free area of the plates were varied to study column performance. The results are illustrated in Figures 3, 4 and 5 in which the flow rates are given in terms of superficial linear velocities expressed in millimetres per second (mm/s).

Figure 3 illustrates the effect of the water flow rate on the residence time of the resin between adjacent plates at a number of stirring rates with a fixed resin flow rate.  In Figure 3 the axis of abscissae represents the water flow expressed in mm/s and the axis of ordinates represents the resin residence time between adjacent plates expressed in seconds.  Curves 1, 2, 3 and 4 represent stirring speeds of 45, 37, 20 and 27 revolutions per minute (rpm) respectively.  The resin flow rate was 1.16 mm/s and the free area (hole area) of each plate was 19.5% of the total surface area of the plate.

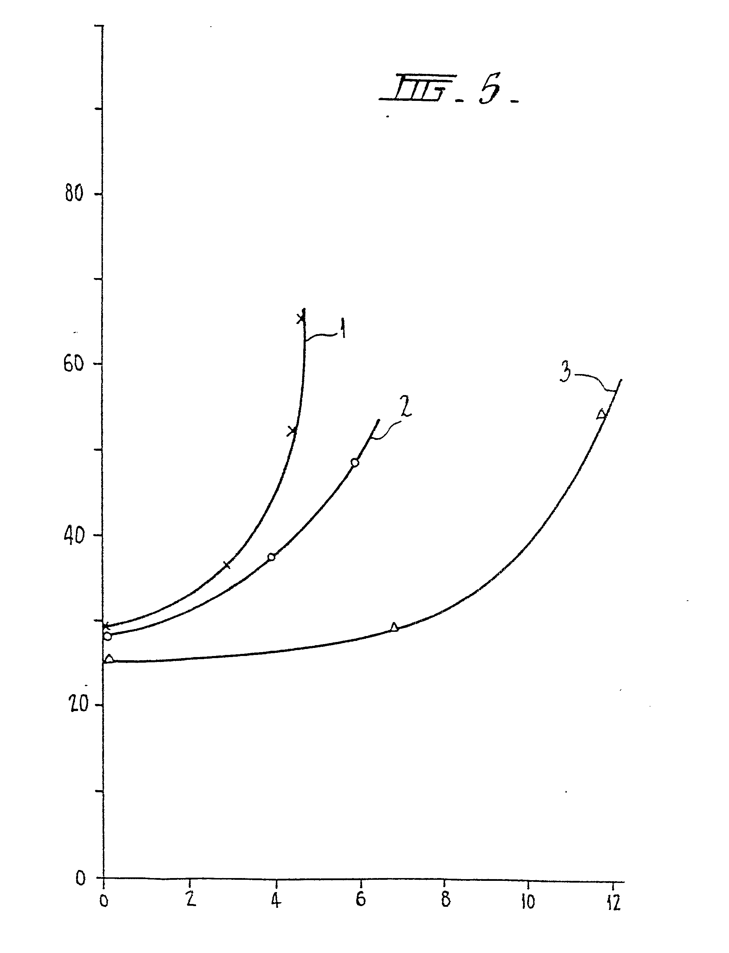

Figure 4 illustrates the effect of stirring speed on the residence time of the resin between adjacent plates for two different water flow rates with a fixed resin flow rate.  In Figure 4 the axis of abscissae represents the stirrer speed expressed in rpm and the axis of ordinates represents the resin residence time between adjacent plates expressed in seconds.  Curves 1 and 2 represent water flow rates of 7.0 and 5.0 mm/s respectively.  The resin flow rate was 1.16 mm/s and the free area of the plates was 19.5%.

Figure 5 illustrates the effect of water flow rate on the residence time of the resin between adjacent plates with different free areas of the plates.  In Figure 5 the axis of abscissae represents the water flow expressed in mm/s and the axis of ordinates represents the resin residence time between adjacent plates expressed in seconds.  Curves 1, 2 and 3 represent free areas of the plates of 10.9, 12.8 and 19.5% respectively. The resin flow rate was 0.68 mm/s and the stirring speed was 27 rpm.

Example 3

This Example illustrates the efficiency of the apparatus of the invention in the desalination of water using a thermally regenerable, amphoteric  magnetic ion exchange resin of particle size 100 to 700 μm and specific gravity 1.20 to 1.21 /"Sirotherm" TR40-A18F ("Sirotherm" is a Trade Mark)/.

The 3 m long 0.33 m diameter column described in Example 1 was fitted with eleven perforated plates each having sufficient 19 mm diameter holes to give a free area of 12.8%. An aqeuous slurry of the resin (25% solids) at a temperature 30°C was fed into the top of the column at a rate of 2.6 l/min and saline water at a temperature of 30°C was fed into the bottom of the column at a rate of 24 l/min. The stirring rate was 55 rpm and the average residence time of the resin between adjacent pairs of plates was 78 seconds.

The salt content of the saline water was reduced from 13.1 milli-equivalents per litre (meq/l) in the feed water to 4.8 meq/l in the product water exiting the top of the column. The salt content of the resin was increased from 57 meq/l (based on the total inlet slurry volume) in the feed slurry to 121 meq/l in the slurry exiting the column.

1.    A process for continuous countercurrent contacting of a particulate solid phase and a liquid phase
comprising:
feeding the uncontacted particulate solid into the first
end of a vertical column divided into compartments by a
plurality of horizontal perforated plates extending
across substantially the entire cross section of the
column and wherein each compartment is provided with a
stirring means;
continuously feeding the uncontacted liquid phase into
the second end of the column and continuously removing
the contacted liquid phase from the first end of the
column;
operating said stirring means to maintain said particulate solid in the form of a fluidised bed and to control
the residence time of the particulate solid in each compartment; and
removing the contacted particulate solid from the second
end of the column.

2.    A process according to claim 1 wherein said
stirring means is adjustable with respect to rate.

3.    A process according to claim 1 or claim 2 wherein said stirring means provided in each compartment is
located in the vicinity of the plate surface which faces
the first end of the column.

4.    A process according to any one of claims 1 to 3
inclusive wherein said stirring means comprises at
least one vane, blade, paddle or disc turbine fitted
normal to a vertical shaft extending along the central
axis of the column.

5.    A process according to any one of claims 1 to
4 inclusive wherein said stirring means provided in
each compartment lies within the first quarter of the vertical distance between the plate surface which faces the first end of the column and the adjacent plate which forms said compartment.

6.      A process according to any one of claims 1 to 5 inclusive wherein the perforations in said perforated plates are circular holes of diameter in the range from 5 mm to 30 mm and make up from 10 to 50% of the plate area.

.7.      A process according to claim 6 wherein the holes are of diameter in the range from 10 mm to 20 mm and make up from 12 to 25% of the plate area.

8.      A process according to any one of claims 1 to 7 inclusive wherein each stirring means is operated at the same rate.

9.      A process according to any one of claims 1 to 8 inclusive comprising operating said stirring means at a rate sufficient to maintain a substantially uniform distribution of particles in each compartment and periodically reducing the rate of stirring to allow the particles to move through the column from one compartment to the next adjacent compartment.

10.      A process according to any one of claims 1 to 8 inclusive comprising continuously feeding the uncontacted particulate solid into the first end of the column, continuously removing the contacted particulate solid from the second  end of the column, and operating said stirring means at a rate which allows the particulate solid to move continuously through the column.

11.      A process according to any one of claims 1 to 10 inclusive wherein said liquid phase is of lower specific gravity than said particulate solid phase which process comprises:

0011870

feeding the uncontacted particulate solid into the
upper end of the vertical column;
continuously feeding the uncontacted liquid phase into
the lower end of the column under sufficient pressure
to force the liquid above the highest plate and continuously removing the contacted liquid phase from the
upper end of the column; and
removing the contacted particulate solid from the lower
end of the column.

12.   A process according to any one of claims 1 to 11
inclusive wherein said liquid phase is of higher specific gravity than said particulate solid phase which
process comprises:
feeding the uncontacted particulate solid into the
lower end of the vertical column;
continuously feeding the uncontacted liquid phase into
the upper end of the column and continuously removing
the contacted liquid phase from the lower end of the
column; and
removing the contacted particulate solid from the upper
end of the column.

13.   A process according to any one of claims 1 to 12
inclusive wherein said particulate solid phase is an
ion exchange resin.

14.   A process according to any one of claims 1 to 13
inclusive wherein said particulate solid phase is a
magnetic ion exchange resin.

15.   An apparatus for promoting contact between a
particulate solid phase and a liquid phase comprising:
a vertical column divided into compartments by a
plurality of horizontal perforated plates extending
across substantially the entire cross section of the
column;

an inlet for the uncontacted particulate solid phase at
the first end of the column and an outlet for the contacted particulate solid at the second end of the column;
an inlet for the uncontacted liquid phase at the second
end of the column and an outlet for the contacted liquid
phase at the first end of the column; and
a stirring means in each compartment.

16.    An apparatus according to claim 15 wherein said
stirring means is adjustable with respect to rate.

17.    An apparatus according to claim 15 or claim 16
wherein said stirring means provided in each compartment
is located in the vicinity of the plate surface which
faces the first end of the column.

18.    An apparatus according to any one of claims 15
to 17 inclusive wherein said stirring means comprises
at least one vane, blade, paddle or disc turbine fitted
normal to a vertical shaft extending along the central
axis of the column.

19.    An apparatus according to any one of claims 15 to
18 inclusive wherein said stirring means provided in
each compartment lies within the first quarter of the
vertical distance between the plate surface which faces
the first end of the column and the adjacent plate which
forms said compartment.

20.    An apparatus according to any one of claims 15
to 19 inclusive wherein the perforations in said
perforated plates are circular holes of diameter in the
range from 5 mm to 30 mm and make up from 10 to 50%
of the plate area.

21.    An apparatus according to claim 20 wherein said
holes are of diameter in the range from 10 mm to 20 mm
and make up from 12 to 25% of the plate area.

0011870

22.    An apparatus according to any one of claims 15 to 21 inclusive wherein said liquid phase is of lower specific gravity than said particulate solid phase comprising:
a vertical column divided into compartments by a plurality of horizontal perforated plates extending across substantially the entire cross section of the column;
an inlet for the uncontacted particulate solid phase at the upper end of the column and an outlet for the contacted particulate solid at the lower end of the column;
an inlet for the uncontacted liquid phase at the lower end of the column, an outlet for the contacted liquid phase at the upper end of the column and means for forcing the liquid through said inlet up through the column and out said outlet; and a stirring means in each compartment.

23.    An apparatus according to any one of claims 15 to 21 inclusive wherein said liquid phase is of higher specific gravity than said particulate solid phase comprising:
a vertical column divided into compartments by a plurality of horizontal perforated plates extending across substantailly the entire cross section of the column;
an inlet for the uncontacted particulate solid phase at the lower end of the column and an outlet for the contacted particulate solid phase at the upper end of the column;
an inlet for the uncontacted liquid phase at the upper end of the column and an outlet for the contacted liquid phase at the lower end of the column and means for controlling the rate of flow of the liquid phase

0011870

through the column; and

a stirring means in each compartment.

24. A process for continuous countercurrent contacting of a particulate solid phase and a liquid phase substantially as hereinbefore described with reference to Figure 1 or Figure 2 of the accompanying drawings.

25. A process according to any one of claims 1 to 14 inclusive substantially as hereinbefore described with reference to Example 2 or Example 3.

26. Apparatus for continuous countercurrent contacting of a particulate solid phase and a liquid phase substantially as hereinbefore described with reference to Figure 1 or Figure 2 of the accompanying drawings.

27. Apparatus according to any one of claims 15 to 23 inclusive substantially as hereinbefore described with reference to the Examples.

1/4

0011870

Fig. 1.

Fig. 2.

*Fig. 3.*

0011870

FIG. 4.

FIG. 5.

0011870

EUROPEAN SEARCH REPORT    EP 79 200 479

# DOCUMENTS CONSIDERED TO BE RELEVANT

| Category | Citation of document with indication, where appropriate, of relevant passages | Relevant to claim | CLASSIFICATION OF THE APPLICATION (Int Cl |
|---|---|---|---|
| X | <u>GB - A - 1 451 001</u> (DUPONT DE NE-MOURS)<br><br>  * Page 2, lines 3-90; page 3, lines 1-31; page 4, lines 1-93; 113-130; page 5, lines 1-82; page 7, lines 5-17 *<br><br>-- | 1-13,<br>15-27 | B 01 J 47/10<br>B 01 J 8/20<br>C 02 F 1/42 |
| | <u>GB - A - 1 231 601</u> (C.S.I.R.O.)<br><br>  * Page 4, lines 32-54; page 5, lines 1-52 *<br><br>-- | 1,4,8,<br>11,13,<br>14,15,<br>18,22,<br>24,26 | |
| A | <u>GB - A - 741 098</u> (PERMUTIT)<br><br>---- | | |

<div align="right">

TECHNICAL FIELDS
SEARCHED (Int Cl

B 01 J 47/10
        8/20
C 02 F 1/42

</div>

<div align="right">

CATEGORY OF
CITED DOCUMENTS

X. particularly relevant
A technological background
O. non-written disclosure
P intermediate document
T theory or principle underlying
  the invention
E: conflicting application
D: document cited in the
  application
L citation for other reasons

&. member of the same patent
family.
corresponding document

</div>

The present search report has been drawn up for all claims

| Place of search | Date of completion of the search | Examiner |
|---|---|---|
| The Hague | 05-03-1980 | WENDLING |